# EUROPEAN PATENT APPLICATION

(11) **EP 2 327 537 A1**
(43) Date of publication of application: **01.06.2011**
(21) Application number: 09769394.9
(22) Date of filing: 26.06.2009
(51) Int. Cl.: B29D 31/00, B29C 70/34

(54) **DEVICE AND METHOD FOR THE MANUFACTURE OF THREE DIMENSIONAL BEAM TYPE ELEMENTS IN COMPOSITE MATERIAL**

(30) Priority: 27.06.2008 ES 200801934
(71) Applicant: Airbus Operations, S.L., 28902 Madrid (ES)
(72) Inventor: PÉREZ PASTOR, Augusto, E-28906 Madrid (ES); MENENDEZ MARTIN, Jose Manuel, E-28906 Madrid (ES); MÍGUEZ CHARINES, Yolanda, E-28906 Madrid (ES)
(74) Representative: Elzaburu Marquez, Alberto
(86) International application number: PCT/ES2009/070257
(87) International publication number: WO 2009/156548

(57) **Abstract**

The invention relates to a device for the manufacture of three-dimensional beam type elements in composite material with reinforcing fibres preimpregnated with polymeric resins, starting with laminates (21, 22) layed and precut without polymerization, said device comprising a head (15) that comprises in its turn a roller train (17), it being possible for said head (15) to move longitudinally along a fixed bedplate, in such a way that, as said head (15) moves, the roller train acts on the laminates (21, 22) without polymerization, compacting and forming them, thus forming the laminates (21, 22) with their final geometry in one go, in such a way that said laminates (21, 22) are ready for their subsequent integration. The invention also relates to a method of manufacture of three-dimensional beam type elements in composite material.

## Description

### FIELD OF THE INVENTION

The present invention relates to a device for the manufacture of elements in composites, in particular for aircraft, as well as to a method of manufacture of said elements in composites.

### BACKGROUND OF THE INVENTION

The intensive introduction of advanced composites in aerospace primary structures has become a fundamental method of structural optimization, based on the weight saving and improvement of mechanical properties, thus becoming one of the primary objectives in the design and manufacture of the new generations of aircrafts.

This intensive introduction of composites has been possible owing to improvements in techniques and equipment for automatic stacking and cutting of laminates obtained from plies constituted of reinforcing fibres pre-impregnated with polymeric resins. However, the automation of manufacturing processes has been limited almost exclusively to the production of large two-dimensional laminates (skins of large aerofoils such as wings, stabilizers or fuselage skins), whereas the manufacture and integration of reinforcing elements and stiffeners proper of the monolithic configurations of these aeronautical structures (stringers and stiffeners) still include a considerable ratio of manual manufacturing.

Until now, the manufacture of aircraft stringers and stiffeners has basically been carried out by a process of tape-laying and cutting similar to the manufacture of skins, comprising a numerical control machine equipped with a head that integrates a spool that feeds the pre-impregnated material, a roller that deposits and compacts the material against the table where the laminate is stacked, and one or more blades that cut the material to the required size, thus obtaining a two-dimensional laminate.

The two-dimensional laminates obtained by the above method, though without polymerization, are hot-formed by methods similar to the cold stamping of metals to produce three-dimensional beam type elements, developable or quasi-developable, with open sections in the shape of L, J, C, etc. These open sections, alone or coupled together, give rise to beam type elements with sections of T, I, etc. shape.

An alternative to the conventional forming processes is pultrusion, which permits the forming and continuous consolidation of beam type elements by a system comprising: a set of spools that feed the system with the raw material, in the form of tapes or plies of pre-impregnated material, a roller train that stacks, compacts and gradually and continuously shapes the series of tapes or plies of raw material without polymerization, and a heating system that consolidates - also continuously - the laminates thus formed, producing three-dimensional beam type elements similar to those obtained by conventional forming.

However, application of the pultrusion process is excessively complex for the production of stringers and stiffeners with the configurations usually employed in aeronautical structures: laminates of large thickness, with variable thicknesses, considerable curvature, with changes of plane necessary for connecting them to skins of variable thickness, etc.

The aim of the present invention is to remedy these drawbacks.

### SUMMARY OF THE INVENTION

The present invention relates to a device for the manufacture of three-dimensional beam type elements - stringers or stiffeners - of composite material (which contains reinforcing fibres pre-impregnated with polymeric resins) from laminates previously layed and cut, though without polymerization, placing said laminates in moulds that will provide support for forming, and said moulds can be the curing moulds of the stringers or stiffeners, as well as a method for the manufacture of said elements. The device according to the invention comprises a device equipped with a moving head that in its turn includes a train of movable rollers for compacting and forming the laminates without polymerization of the stringers or stiffeners against the aforesaid moulds, leaving the stringers or stiffeners with their final geometry and ready for integration in the skin of the aircraft.

The method according to the invention permits the taping and cutting of the laminates without polymerization that will give rise to the stringers and stiffeners, with all their complexity, placing these laminates in moulds that will serve as support for the forming operation (which can be the curing moulds of the stringers or stiffeners), comprising the use of a train of movable rollers for compacting and forming the laminates of the stringers or stiffeners against said moulds.

Other characteristics and advantages of the present invention will become clear from the detailed description presented below, of an example of application, referring to the accompanying drawings.

### DESCRIPTION OF THE DRAWINGS

Figs. 1a, 1b and 1c show, schematically, the three steps of the method usually employed for forming the stringers or stiffeners of an aircraft.
Figs. 2a and 2b show, schematically, a front and side view of the device for the manufacture of elements in composites according to a first embodiment of the present invention. Figs. 2c, 2d and 2e show, in section, the three consecutive states of forming of the laminates according to the method of manufacture of elements in composites according to a first embodiment of the present invention.
Figs. 3a, 3b and 3c show schematically, in three steps, the operations of the forming process of the laminates of composite according to a first embodiment of the present invention.
Figs. 4a and 4b show schematically, in plan and raised, the basic element of the movable head of the device for the manufacture of elements in composites according to a first embodiment of the present invention.
Fig. 5 shows schematically, in isometric perspective, part of the fixed bedplate of the system for forming the laminates of composite according to a second embodiment of the present invention.
Fig. 6 shows schematically, in section, the successive stages of the forming process of the laminates of composite according to a second embodiment of the present invention.
Fig. 7 shows schematically, in isometric perspective, part of the fixed bedplate of the system of forming of the laminates of composite according to a third embodiment of the present invention.
Figs. 8a and 8b show schematically, in plan and raised, the basic element of the movable head of the device for the manufacture of elements in composites according to a third embodiment of the present invention.
Fig. 9 shows schematically, in section, the successive stages of the forming process of the laminates of composite according to a third embodiment of the present invention.

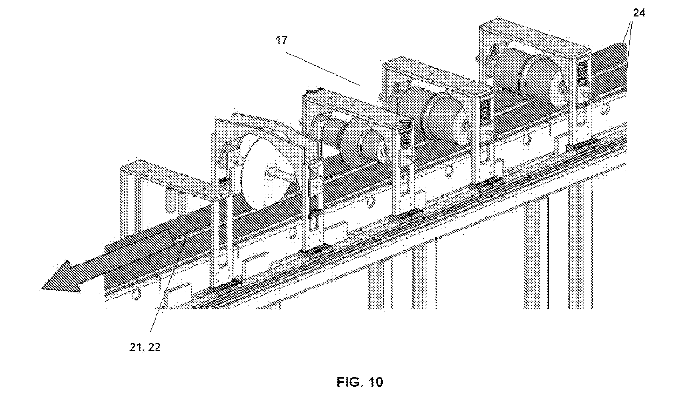

Fig. 10 shows, schematically, a possible practical implementation of the system of forming of laminates of composite according to the first, second or third embodiment of the present invention.

### DETAILED DESCRIPTION OF THE INVENTION

The invention relates to the field of the manufacture of structures from composites starting with the stacking of plies constituted of reinforcing fibres with defined orientation pre-impregnated with polymeric resins. The application of a process of consolidation by pressure and temperature according to the invention permits the compacting of the material, removing excess resin and volatiles, and its consolidation (by crosslinking of the resin, if it is thermoset, or by welding, if it is thermoplastic), resulting in a panel with high mechanical performances.

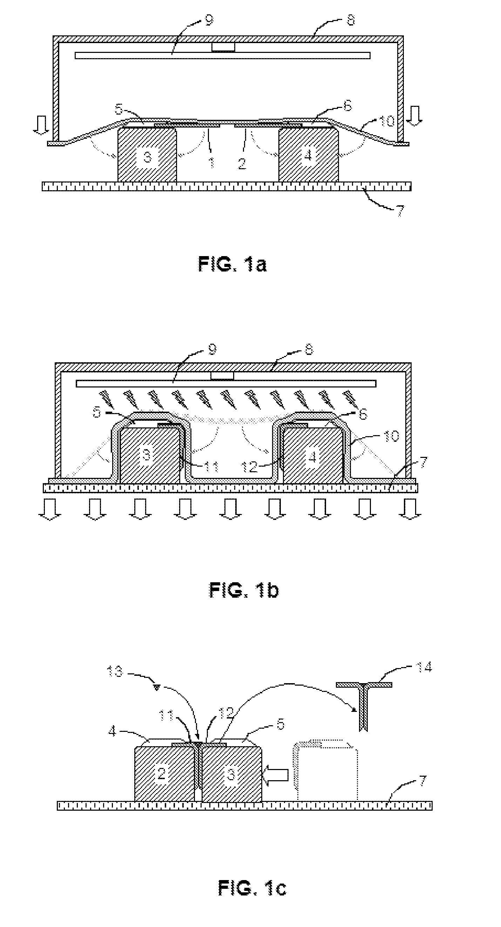

As shown in Figs. 1a-1c, the three schematic stages of the method usually employed for the forming of stringers or stiffeners, according to the prior art, are as described below.

In a first stage, as can be seen in Fig. 1a, the flat laminates 1, 2, from which the stringer or stiffener will be obtained, said laminates 1 and 2 having been stacked and cut beforehand, are located in forming modules 3, 4, the zones of the laminates 1, 2 that will correspond to the feet of the stringer or stiffener being held by means of ledges 5, 6. The forming modules 3, 4 are in their turn positioned on a vacuum table 7, consisting of a perforated plate connected to a vacuum system to permit aspiration through the plate. On vacuum table 7 there is a hood 8 equipped with a heating and cooling system 9 that permits the laminates 1, 2 to be heated to facilitate forming, and an elastic membrane, preferably of silicone, capable of adapting to the geometry of the forming modules 3, 4 located on vacuum table 7.

In a second stage, as can be seen in Fig. 1b, the hood 8 is brought down on vacuum table 7, sealing the edges of the elastic membrane 10 against the table 7. Then the heating system 9 is switched on, thus heating the laminates 1, 2 and accordingly decreasing the viscosity of the resin, facilitating its flow and, after this operation, switching on the vacuum system of table 7. The elastic membrane 10, under suction by vacuum table 7, then adapts to the geometry of the assembly of table 7 and forming modules 3, 4, pulling and deforming the laminates 1, 2 and forming them to their final L section, 11, 12.

In a third stage, according to Fig. 1c, once the laminates 11, 12 have been formed, they are left to cool (naturally, by means of forced ventilation or by means of some equivalent cooling mechanism) without removing the elastic membrane 10 or the vacuum produced by table 7, thus permitting stabilization of the section obtained for said laminates 11, 12. Once this has been done, the vacuum is removed and hood 8 is removed. Next, the forming modules 3, 4 are joined, joining in their turn the laminates 11, 12 of L section. So that the feet of the final formed stringer form a continuous surface suitable for bonding, a filler 13 is added, adapted to the quasi-triangular geometry contained between the feet of the stringer 11, 12 and a straight line resting on them, thus obtaining the final section of the stringer or stiffener 14, which will already be ready for integration with the skin of the covering.

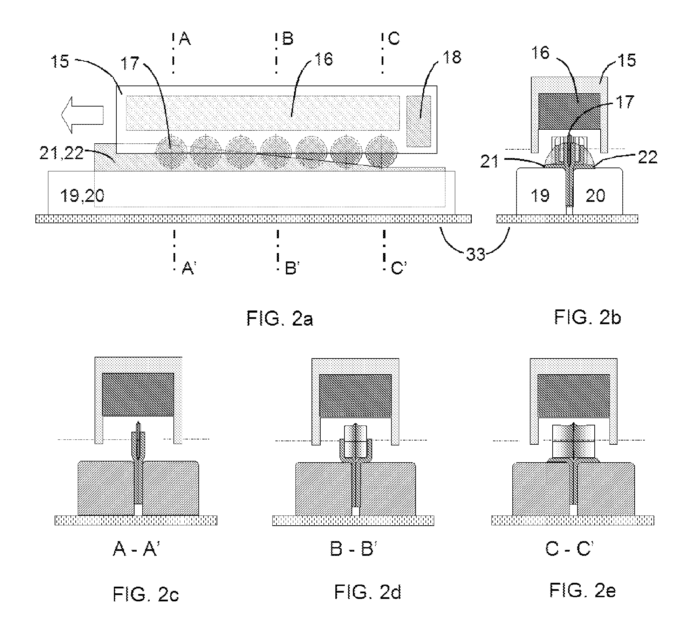

Figs. 2a and 2b show, schematically, the device for the manufacture of structures of composite according to a first embodiment of the present invention, comprising a movable head 15 that can travel longitudinally along a fixed bedplate formed by a support 33 on which two forming modules 19, 20 rest, which lock together two flat laminates 21, 22 in the vertical position. The movable head 15 basically comprises a heating system 16 for heating a roller train 17 and the two laminates 21, 22 that are to be formed, as well as a cooling system 18 based on injection of cold air or gas, or on any other equivalent system that permits the laminates 21, 22 to be cooled once formed. Moreover, Figs. 2c, 2d and 2e show three sections A-A', B-B' and C-C' of Fig. 2a that show three consecutive states of forming of the laminates 21, 22.

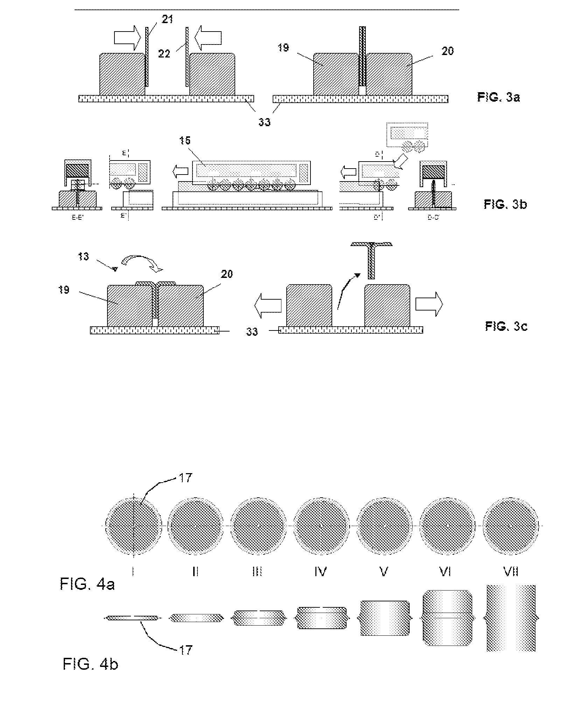

As shown schematically in Figs. 3a-3c, the operations of the forming process of the laminates 21, 22 according to a first embodiment of the invention can be divided into three steps or stages: first stage with position of flat laminates 21, 22 against the forming modules 19, 20 and closure of modules 19, 20 (Fig. 3a); second stage of forming by means of roller train 17 (Fig. 3b), and third stage of placement of filler 13 and separation of modules 19, 20 for extraction of the stiffener/stringer (Fig. 3c).

As is clear from Figs. 4a and 4b, the roller train 17 of the forming device according to a first embodiment of the invention, each roller being identified with Roman numerals from I to VII, 7 being the number of rollers considered most suitable for carrying out gradual forming for intermediate thickness laminates, without discounting the possibility of increasing or reducing the number of rollers according to the particular characteristics of each process, performs progressive forming of the laminates 21, 22 from their original flat section to their final L section.

Thus, the purpose of the proposed invention is to simplify the tooling and the operations of the process usually employed for forming stringers or stiffeners of composites made from preimpregnated laminates, and described in Figs. 1a-1c, using hot forming of the laminates 21, 22 in one go , to make up the final T-shaped stringer.

Accordingly, the object of the invention is a device that comprises a movable roller train 17 for compacting and forming the laminates 21, 22 without polymerization of the stringers or stiffeners against the aforementioned forming modules 19, 20, leaving the stringers or stiffeners with their final geometry, and ready for integration in the skin of the aircraft.

Thus, the device and the method proposed in a first embodiment of the present invention, and as shown schematically in Figs. 2a-2e, makes it possible to replace many of the devices used in the conventional process described in Figs. 1a-1c. Thus, in the conventional method it was necessary to use a vacuum table 7, a movable hood 8 equipped with a heating and cooling system 9 and a silicone membrane 10, all with dimensions somewhat greater than the dimensions of the stringer to be formed, whereas the method according to the invention simply requires a movable head 15 of reduced dimensions that carries out the forming process of the laminates 21, 22 progressively.

The operations of the forming process according to a first embodiment of the invention, using the device of Figs. 2a-2e, are represented schematically in Figs. 3a, 3b and 3c, and can be summarized in the following steps or stages: in a first stage, Fig. 3a, the flat laminates 21, 22 are positioned against the forming modules 19, 20 and said modules 19, 20 are closed; in a second stage, Fig. 3b, the roller train 17 is brought up to one end of the two laminates 21, 22, starting the heating and forming of said end with the first roller I against the forming modules 19, 20 (section D-D' in Fig. 3b), with a longitudinal movement, heating and forming being continued progressively and opening the laminates 21, 22 until they reach the final T section (section E-E' in Fig. 3b) in such a way that once all the rollers I to VII of roller train 17 have passed over a section, the cooling system 18 positioned at the end of the movable head 15 cools the laminates 21, 22 so that they maintain the final section produced; finally, according to a third stage, Fig. 3c, the placement of filler 23 and separation of forming modules 19, 20 are carried out, for extraction of the stiffener/stringer in its final form.

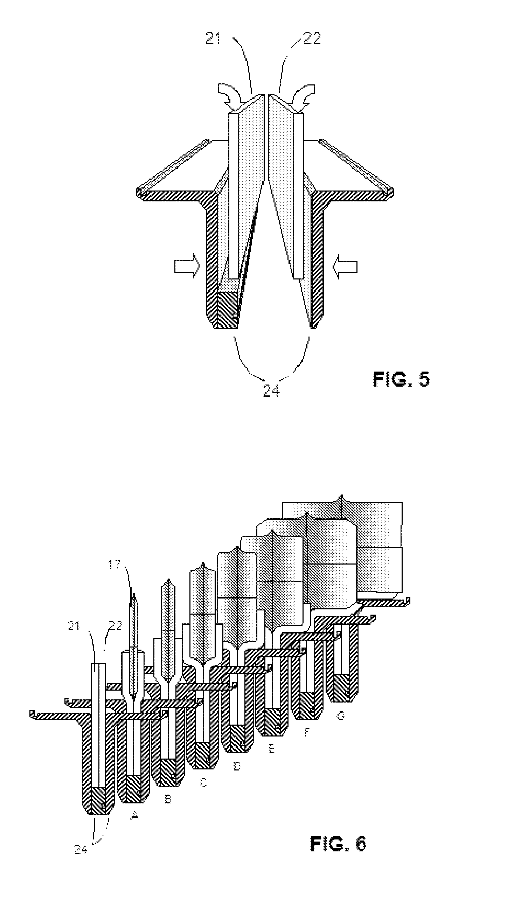

The forming process can be carried out on the forming modules 19, 20, which have this sole function, according to a first embodiment of the invention, or directly on the curing moulds 24 (which are used subsequently for the curing of the article) in the form of angles that are shown schematically in Fig. 5, according to a second embodiment of the invention, thus saving several operations in the process of manufacture of the stringer (extraction of the stringer from the forming tools 19, 20 and transport of the stringer to said curing moulds 24). The mechanics of the process according to the second embodiment of the invention is identical to that described for the first embodiment, and is shown schematically in Fig. 6, which illustrates the variation in stringer section geometry as it is acted upon by each of the rollers of the roller train 17, designated with the letters A to G, and moreover these rollers can be of variable section, according to the second embodiment of the invention.

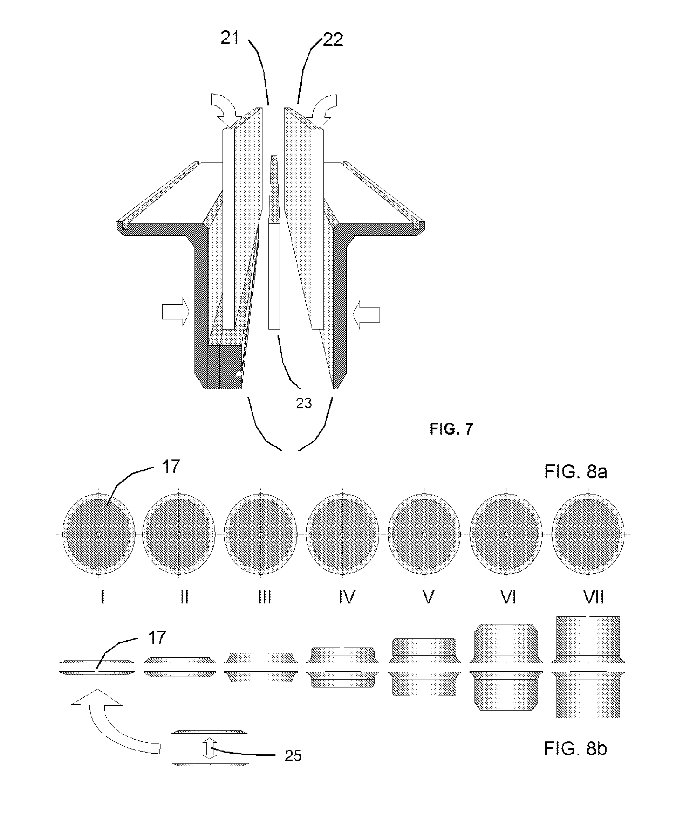

According to a third embodiment of the invention, the process has to allow for variations in the section of the stringer: one of the requirements of the dimensioning of the stringers may require the introduction of an intermediate laminate 23 in the web of the stringer. The forming process according to this third embodiment would be identical to that described previously, permitting the introduction of a spacing 25 between the two halves of the forming rollers, the forming device thus adapting to the stringer section geometry, as can be seen from Figs. 7 and 8a-8b. The system thus permits progressive variations of the thickness of the intermediate laminate 23.

As can be seen from Fig. 7, according to a third embodiment of the invention, the forming of a different stringer section is possible, in which in addition to the flat laminates 21, 22, a third laminate 23 is introduced, which will be inserted between the aforementioned laminates 21, 22, and will form part of the web of the stringer. The roller train 17 that performs the progressive forming of the laminates of the new section described in Fig. 7, comprises a spacing 25 between the two halves of the rollers, of width equal to the width of the intermediate laminate 23, for adapting the process to the new section required for the stringer.

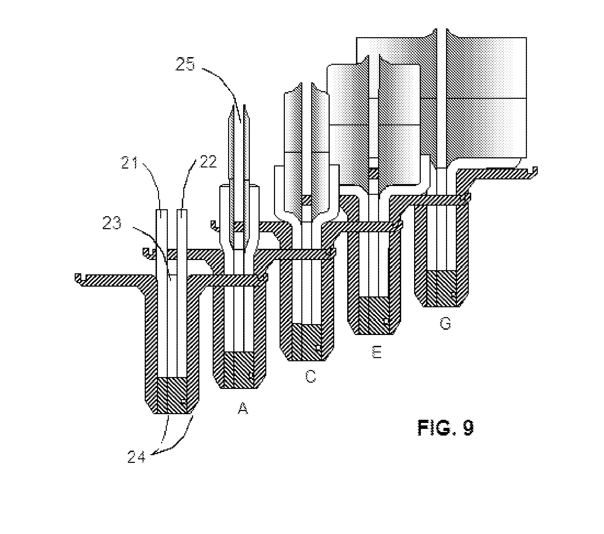

Finally, Fig. 9 shows schematically, in section, the forming and curing angles 24, according to a third embodiment of the invention, already closed. Fig. 9 also shows the laminates 21, 22 and 23 in successive stages of the forming process of the new stringer section with a central laminate 23 in its web.

Modifications that are included within the scope defined by the following claims can be introduced in the embodiments that have just been described.

## Claims

1. Device for the manufacture of three-dimensional beam type elements in composite material with reinforcing fibres pre-impregnated with polymeric resins, starting from laminates (21, 22) layed and precut without polymerization, **characterized in that** said device comprises a head (15) that comprises in its turn a roller train (17), it being possible for said head (15) to move longitudinally along a fixed bedplate, in such a way that, as said head (15) moves, the roller train acts on the laminates (21, 22) without polymerization, compacting and forming them, thus forming the laminates (21, 22) with their final geometry in one go, in such a way that said laminates (21, 22) are ready for subsequent integration.

2. Device for the manufacture of three-dimensional beam type elements in composite material according to Claim 1, **characterized in that** the head (15) comprises a heating system (16) for heating the roller train (17) and the laminates (21, 22) that are to be formed.

3. Device for the manufacture of three-dimensional beam type elements in composite material according to any of the preceding claims, **characterized in that** the head (15) comprises a cooling system (18) for cooling the laminates (21, 22) once formed.

4. Device for the manufacture of three-dimensional beam type elements in composite material according to Claim 3, **characterized in that** the cooling system (18) is based on the injection of cold air or gas.

5. Device for the manufacture of three-dimensional beam type elements in composite material according to any of the preceding claims, **characterized in that** the rollers of the roller train (17) are of variable section.

6. Device for the manufacture of three-dimensional beam type elements in composite material according to any of the preceding claims, **characterized in that** the device comprises two forming modules (19, 20) against which the head (15) acts, to form the laminates (21, 22).

7. Device for the manufacture of three-dimensional beam type elements in composite material according to any of Claims 1-5, **characterized in that** forming of the laminates (21, 22) is carried out directly on curing moulds (24), which are then used for the curing of said three-dimensional elements.

8. Device for the manufacture of three-dimensional beam type elements in composite material according to any of Claims 1-5, **characterized in that** together with the laminates (21, 22), a third laminate (23) is introduced, being inserted between the aforesaid laminates (21, 22), in such a way that the roller train (17) that carries out the progressive forming of the laminates (21, 22) has a spacing (25) between the two halves of the rollers, of width equal to the width of the intermediate laminate (23), so that the process is thus adapted to the new section required.

9. Device for the manufacture of three-dimensional beam type elements in composite material according to any of the preceding claims, **characterized in that** the three-dimensional elements are T-shaped stringers or stiffeners of aeronautical structures.

10. Method of manufacture of three-dimensional beam type elements in composite material with reinforcing fibres pre-impregnated with polymeric resins, starting from laminates (21, 22) layed and precut without polymerization, according to the device of Claim 1, **characterized in that** it comprises the followings stages:
a) placing the laminates (21, 22) on forming devices and then closing said devices;
b) bringing the roller train (17) up to one of the ends of the laminates (21, 22), beginning the forming of said end with the first roller, with the forming continuing progressively until all the rollers of the roller train (17) have passed over a section and have formed it to its final shape;
c) stabilization of the final shape of the laminates (21, 22) obtained, and
d) separation of the forming devices for extraction of the three-dimensional elements in their final shape obtained.

11. Method of manufacture of three-dimensional beam type elements in composite material according to Claim 10, **characterized in that** the forming devices are two forming modules (19, 20) against which the roller train (17) of head (15) acts in order to form the laminates (21, 22).

12. Method of manufacture of three-dimensional beam type elements in composite material according to Claim 10, **characterized in that** the forming devices are the actual curing moulds (24), which are then used for the curing of the aforementioned three-dimensional elements.

13. Method of manufacture of three-dimensional beam type elements in composite material according to Claim 10, **characterized in that** the forming process additionally comprises the introduction of a spacing (25) between the two halves of the forming rollers, so as to permit progressive variations of the thickness of an intermediate laminate (23) that is inserted between the laminates (21, 22).

14. Method of manufacture of three-dimensional beam type elements in composite material according to any of Claims 10-13, **characterized in that** the three-dimensional elements are T-shaped stringers or stiffeners of aeronautical structures.
